# FASCICULE DE BREVET EUROPEEN

(11) **EP 1 038 478 B1**
(45) Date de publication et mention de la délivrance du brevet: **22.12.2010**
(21) Numéro de dépôt: 00201789.5
(22) Date de dépôt: 23.05.1996
(51) Int. Cl.: A47G 7/06, B65D 85/50

(54) **Support pour la présentation de bouquets individuels de fleurs**
Träger zur Präsentierung von einem Blumenstrauss
Support for presenting a flower bouquet

(30) Priorité: 24.05.1995 FR 9506402
(43) Date de publication de la demande: 27.09.2000
(62) Demande divisionnaire de: 96917538.9
(73) Titulaire: Charrin, Philippe, 26600 Beaumont Monteux (FR); Charrin, André, 26600 Beaumont Monteux (FR)
(72) Inventeur: Charrin, Philippe, 26600 Beaumont Monteux (FR); Charrin, André, 26600 Beaumont Monteux (FR)
(74) Mandataire: Machtalère, Georges

(56) Documents cités:
- EP-A- 0 428 234
- EP-A- 0 635 438
- DE-A1- 4 208 618
- FR-A- 1 386 049
- FR-A- 2 619 698
- US-A- 754 248
- US-A- 2 540 707
- US-A- 4 915 224

## Description

L'invention est relative à un support pour la présentation de bouquets individuels de fleurs.

Le document GB-A-2128083 décrit une feuille d'habillage d'un pot de fleurs, lequel est posé sur un tampon en matériau absorbant servant de réservoir d'eau. La base du tampon est placée sur une feuille imperméable à l'eau, et relevée le long de la surface latérale du pot pour empêcher toute fuite d'eau vers l'extérieur. Le diamètre du tampon doit néanmoins être adapté au diamètre de la base du pot. Un tel dispositif ne peut pas servir pour la présentation d'un bouquet de fleurs coupées ne faisant pas usage d'un pot rigide.

Le document FR 1,386,049 A décrit un support pour la présentation de bouquets individuels de fleurs selon le préambule de la revendication 1.

L'invention a pour objet un support pour la présentation individuelle de bouquets de fleurs, elle consiste en une pièce technique rigide, de mise en place rapide, permettant la présentation de bouquets individuels, servant de support simple pour bouquet de fleurs coupées, et de support pour bouquet de fleurs séches en magasin et libre service, en offrant la possibilité de transformation, par la mise en place d'une feuille étanche, en bouquet à réserve d'eau, en garantissant par sa forme conique et l'apport d'eau, une stabilité parfaite. De ce fait il devient un vase jetable. Des collerettes rondes ou carrées s'adaptent au dispositif, et le transforme en coupe jetable.

La présente invention concerne un support livré à plat à montage rapide, ou en volume s'adaptant à tout bouquet de fleurs coupées comme support en stockage ou à la vente, par ses différentes formes avec ou sans fond, ronds, carres, triangulaires, ou autres

Ce support et son bouquet pliés, dans toutes feuilles étanches, communément employées en milieu horticole ou fleuriste, permet une fois en forme de contenir une réserve d'eau dont le poids à sa base assure une stabilité parfaite avec une hauteur d'eau pour le transport de 2cm.

Le principe selon l'invention permet de transporter, du lieu de vente au destinataire, un bouquet plié avec la réserve d'eau contenue dans son emballage, en lui assurant sa conservation jusqu'au client final, et tout le long du trajet sans flétrissement.
Il est facile de compenser l'eau évaporée, sans avoir tout au long de sa durée de vie besoin d'utiliser de vase.
Le fleuriste peut ajouter des conservateurs professionnels, ou des colorants simples, ou gélifiant pour améliorer la présentation.

Il se pose simplement sur un meuble ou sur toutes surfaces planes.
Cette invention va permettre au fleuriste, de pouvoir offrir une possibilité de décoration personnelle à sa clientèle et d'améliorer la vente, par la possibilité de jeux de lumière et la coloration de l'eau, qui n'était pas permise avant . Par impression, de la feuille, le fleuriste peut assortir celle ci au couleur du bouquet et y faire imprimer son logo ou son nom. L'effet décoratif peut étre amélioré par l'adjonction de feuilles colorées, mis sous le cône à. plats ou froissées.

Une fois les fleurs fanées, le consommateur final jettera l'ensemble sans avoir eu besoin de défaire l'emballage.

Un dispositif non conforme à l'invention est indiqué dans les dessins suivants. Ces dessins sont à titre indicatif seulement.

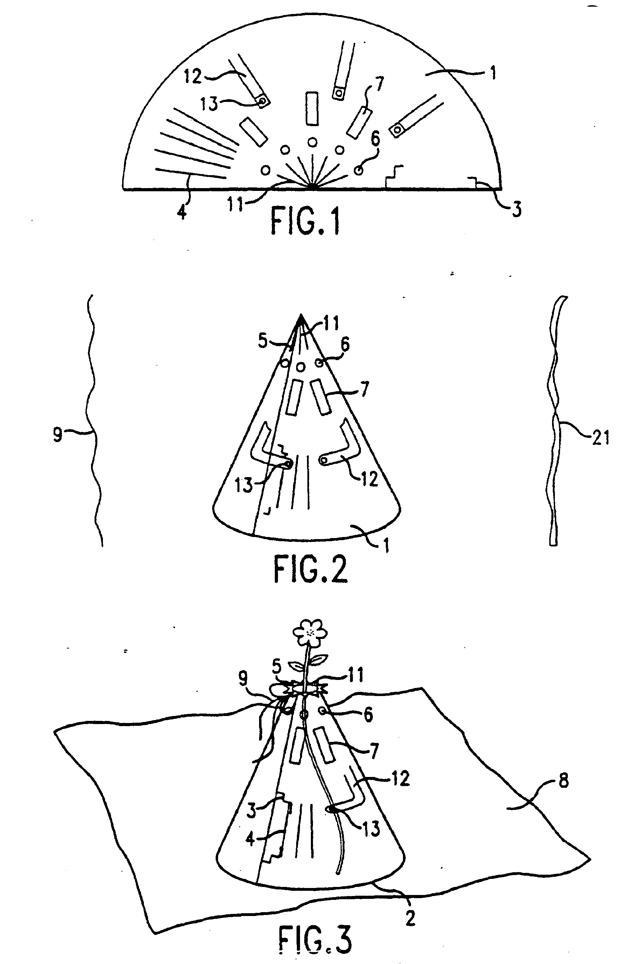

La figure 1 représentant le dispositif à plat
La figure 2 représentant le dispositif formé avec lacets et rubans
La figure 3 représentant le dispositif prêt à l'emploi avec sa feuille d'emballage et ses fleurs

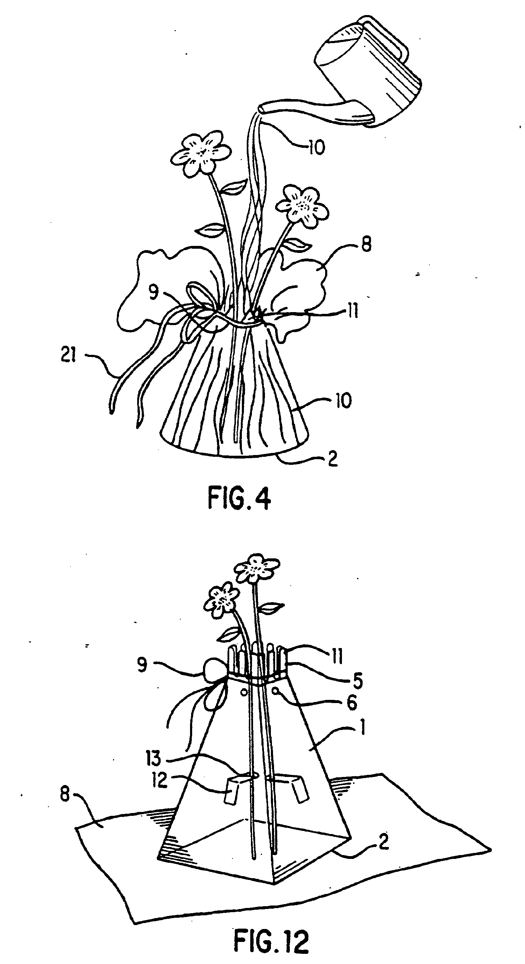

La figure 4 représentant le dispositif réalisé avec son bouquet et le remplissage

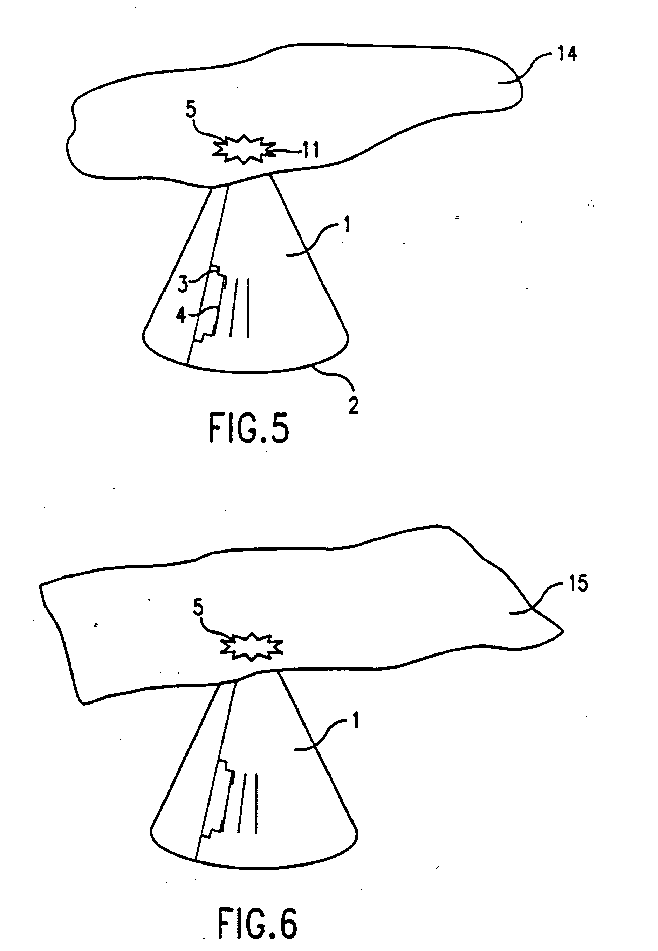

La figure 5 représentant le dispositif avec sa coupe ronde pour présentation couchée
La figure 6 représentant le dispositif avec sa coupe carrée
La figure 7 représentant le dispositif différent à plat, pour conservation pendant les voyages terrestres ou aériens pour les Pays producteurs n'ayant pas de consommation locale
La figure 8 représentant le dispositif formé
La figure 9 représentant le dispositif formé avec sa feuille et sa botte de fleurs

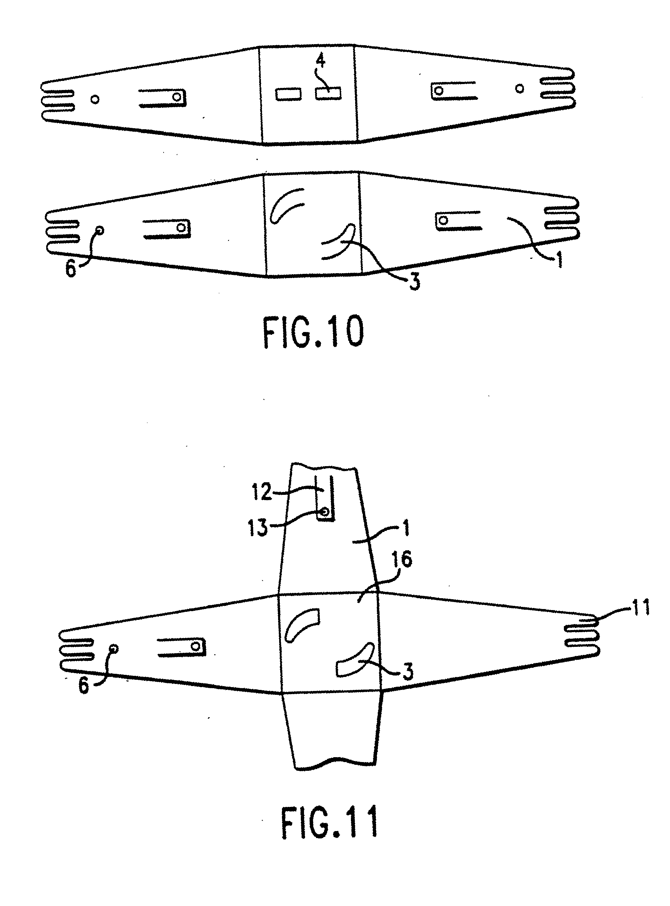

La figure 10 représentant le dispositif à plat carré avec fond
La figure 11 représentant le dispositif carré en forme
La figure 12 représentant le dispositif carré monté avec sa feuille

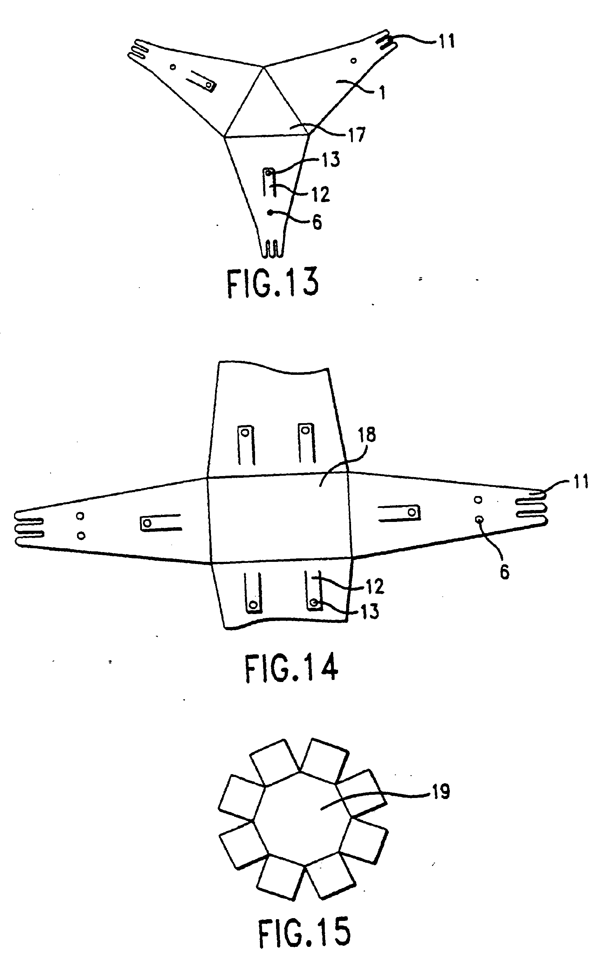

La figure 13 représentant le dispositif triangulaire à plat avec fond
La figure 14 représentant le dispositif rectangulaire ou autres à plat avec fond
La figure 15 représentant le dispositif servant de fond pouvant s'adapter à tous les modèles

Le dispositif (1) est composé de: feuilles rigides, resistantes à l'eau, translucide, ou transparente. d'épaisseur suflisante pour assurer le maintien de l'eau et du bouquet dans un volume rigide.

L'invention a pour objet une pièce technique de différentes hauteurs, pour tout bouquets de toutes fleurs, permettant de les présenter, individuellement, verticalement, sans eau.

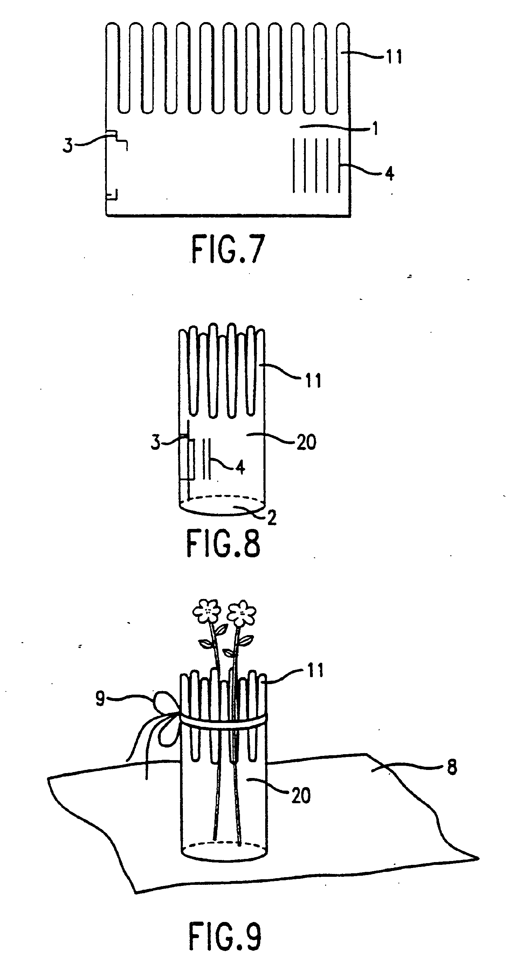

Oblenue par découpe, thermoformage ou injection la forme à plat (1) avant sa mise en volume restitura par le système de clipsage (3) et de réglage (4), une forme conique étroite en haut (5) munie de lamelles (11) s'appuyant sur les tiges-du bouquet, large en bas (2) de diamètre diffèrent et s'adaptant au bouquet.
Les orifices (6) permettent une première fixation du bouquet au dispositif avant la mise en place de la feuille (8) par tout lien (9) glissé dans les dits orifices, de le rendre solidaire en lui permettant une présentation individuelle et verticale.
Ce lieu peut également avoir le mème résultat en resserrant les lamelles (11).
Le rayon de définition du support en gardant le même principe permet la restitution de cône de forme et de volume différent comme indiqué sur les figures 7 et 8.
L'invention selon le principe de pliage du bouquet classique, constitué du dispositif et d'une feuille étanche (8) relevée, et précollée sur celui ci au moyen de double face (7) facilitant la mise en forme de la feuille . Les languettes (11) permettent un deuxième attachage final au dessus du lien (9), par un ruban (21) décoratif ,maintenant la feuille (8) contre les lamelles souples (11) qui s'appuient sur les tiges du bouquet.
A ce moment là, le bouquet de fleurs est complètement solidaire du dispositif.
Le remplissage d'eau par l'ouverture (5) se localisant en base (2) assure la conservation des fleurs.

Le poids de l'eau (10) assure par lestage. la stabilité de l'ensemble et il devient un vase jetable. Pour des compositons hautes avec très peu de fleurs, des languettes (12) percées d'un orifices (13) peuvent être mise en place intérieurement pour tenir la tige de certaines fleurs.
Des collerettes rondes (14) ou carrées (15) peuvent être adaptées sur tous les dispositifs.
Des dispositifs, suivant le même principe peuvent être concus, carrés (16) triangulaire (17) rectangulaire (18), avec fond pour certaines fleurs tropicales.
Un fond (19) peut s' adapter à la plupart des dispositifs.
Un dispositif selon les mêmes principes (20) cylindrique, de longueur différente permet aux fleurs des pays producteurs, aux pays consommateurs en garantissant la fraicheur avec seulement trés peu d'eau.
Le dispositif, permet à moindre frais de réaliser des bouquets, sans avoir recours à des vases classiques de pouvoir les offrir et les conserver.

Dans un support selon l'invention la rigidité de la feuille est renforcée par des nervures.

## Revendications

1. Support pour la présentation de bouquets individuels de fleurs comportant:
une feuille repliable (1), équipée d'un système de réglage mâle et femelle (3, 4) pour assurer la mise en volume, une pluralité de lamelles (11) agencées à la partie supérieure en position d'utilisation, et autorisant une ouverture variable s'adaptant au format du bouquet à la partie supérieure en position d'utilisation, un fond (2, 16, 17, 18, 19) ouvert ou fermé agencé à la partie inférieure et ledit fond comprenant une base ayant une surface supérieure à la surface de l'ouverture variable à ladite partie supérieure en position d'utilisation, et ayant une forme quelconque, notamment carrée, triangulaire, circulaire ou rectangulaire, **caractérisé en ce que** la rigidité de la feuille repliable (1) est renforcée par des nervures, ladite feuille (1) pouvant être réalisée par découpage, thermoformage, ou par moulage à injection.

2. Support pour la présentation de bouquets selon la revendication 1, **caractérisé en ce que** la feuille du support (1) est translucide et résistante à l'eau, et possède une épaisseur suffisante pour assurer le maintien du bouquet après mise en forme du support (1).

3. Support pour la présentation de bouquets selon la revendication 1 ou 2, **caractérisé en ce que** la feuille du support (1) est enroulée selon un cône ou un cylindre.

4. Support pour la présentation de bouquets selon la revendication 1, **caractérisé en ce que** le support (1) est pourvu de languettes (12) découpées se trouvant sous les lamelles (11), de manière à autoriser un positionnement stable de fleurs à grandes tiges.

5. Support pour la présentation de bouquets selon la revendication 1, **caractérisé en ce qu'**une collerette ronde (14) ou carrée (15) peut être adaptée à la partie supérieure du support (1), après pliage des lamelles (11) vers l'extérieur, de manière à transformer le dispositif en coupe jetable.

6. Support pour la présentation de bouquets selon la revendication 1, **caractérisé en ce qu'**une deuxième collerette de forme ronde ou carrée peut être adaptée au support (1) au niveau du fond.

## Claims

1. A holder for presenting individual bouquets of flowers, comprising:
a foldable sheet (1) provided with a male and female adjusting system (3, 4) to ensure putting up, a plurality of leaves (11) arranged at the upper part in the position of use, and allowing for a variable opening adapting to the size of the bouquet at the upper part in the position of use, a bottom (2, 16, 17, 18, 19), open or closed, arranged at the lower part, and said bottom comprising a base having a surface greater than the surface of the variable opening at said upper part in the position of use, and having any shape, namely square, triangular, circular, or rectangular, **characterized in that** the rigidity of the foldable sheet, which can be made by cutting, thermoforming, or by injection molding, is reinforced by ribs.

2. The holder for presenting bouquets according to claim 1, **characterized in that** the sheet of the holder (1) is translucent and water-resistant, and has a thickness which is sufficient for ensuring support of the bouquet once the holder (1) has been shaped.

3. The holder for presenting bouquets according to claim 1 or 2, **characterized in that** the sheet of the holder (1) is rolled up into a cone or cylinder.

4. The holder for presenting bouquets according to claim 1, **characterized in that** the holder (1) is provided with cut-out tabs (12) located under the leaves (11), so as to allow for flowers with long stems to be positioned steadily.

5. The holder for presenting bouquets according to claim 1, **characterized in that** a round (14) or square (15) collar can be adapted to the upper part of the holder (1) after the leaves (11) have been folded outward, so as to transform the device into a disposable bowl.

6. The holder for presenting bouquets according to claim 1, **characterized in that** a second round or square shaped collar can be adapted to the holder (1) at the bottom.

## Patentansprüche

1. Halter zur Präsentation von einzelnen Blumensträußen, umfassend:
ein zusammenklappbares Blatt (1), das mit einem männlichen und weiblichen Verstellsystem (3, 4) versehen ist, um das Aufstellen sicherzustellen, eine Vielzahl von Lamellen (11), die an dem oberen Teil in der Gebrauchsposition eingerichtet sind und eine variable Öffnung ermöglichen, die sich dem Format des Straußes an dem oberen Teil in der Gebrauchsposition anpasst, einen offenen oder geschlossenen Boden (2, 16, 17, 18, 19), der an dem unteren Teil eingerichtet ist, und wobei der Boden eine Basis umfasst, die eine Fläche aufweist, die größer ist als die Fläche der variablen Öffnung an dem oberen Teil in der Gebrauchsposition aufweist, und eine beliebige Form aufweist, nämlich quadratisch, dreieckig, kreisförmig oder rechteckig, **dadurch gekennzeichnet, dass** die Stehfestigkeit des zusammenklappbaren Blattes, das durch Ausschneiden, Wärmeformen oder Spritzgießen ausgebildet werden kann, durch Rippen verstärkt wird.

2. Halter zur Präsentation von Sträußen nach Anspruch 1, **dadurch gekennzeichnet, dass** das Blatt des Halters (1) durchscheinend und wasserfest ist und eine ausreichende Dicke aufweist, um den Halt des Straußes sicherzustellen, nachdem der Halter (1) geformt wurde.

3. Halter zur Präsentation von Sträußen nach Anspruch 1 oder 2, **dadurch gekennzeichnet, dass** das Blatt des Halters (1) zu einem Kegel oder Zylinder aufgerollt ist.

4. Halter zur Präsentation von Sträußen nach Anspruch 1, **dadurch gekennzeichnet, dass** der Halter (1) mit ausgeschnittenen Zungen (12) versehen ist, die sich unter den Lamellen (11) befinden, damit langstielige Blumen standfest positioniert werden können.

5. Halter zur Präsentation von Sträußen nach Anspruch 1, **dadurch gekennzeichnet, dass** ein runder (14) oder quadratischer (15) Rand an dem oberen Teil des Halters (1) angepasst werden kann, nachdem die Lamellen (11) nach außen geklappt wurden, um die Vorrichtung in eine Einwegschale zu verwandeln.

6. Halter zur Präsentation von Sträußen nach Anspruch 1, **dadurch gekennzeichnet, dass** ein zweiter rund oder quadratisch geformter Rand an dem Halter (1) an dem Boden angepasst werden kann.
